# EUROPÄISCHE PATENTSCHRIFT

(11) **EP 3 286 043 B1**
(45) Veröffentlichungstag und Bekanntmachung des Hinweises auf die Patenterteilung: **07.08.2019**
(21) Anmeldenummer: 16719010.7
(22) Anmeldetag: 07.04.2016
(51) Int. Cl.: B60R 22/46, B60R 22/40

(54) **GURTAUFROLLER**
BELT RETRACTOR
ENROULEUR DE CEINTURE

(30) Priorität: 20.04.2015 DE 102015004972
(43) Veröffentlichungstag der Anmeldung: 28.02.2018
(73) Patentinhaber: TRW Automotive GmbH, 73553 Alfdorf (DE)
(72) Erfinder: MICHEL, Frederic, 73527 Schwäbisch Gmünd (DE)
(74) Vertreter: ZF TRW Patentabteilung
(86) Internationale Anmeldenummer: PCT/EP2016/000566
(87) Internationale Veröffentlichungsnummer: WO 2016/169637

(56) Entgegenhaltungen:
- DE-A1- 10 352 025
- DE-A1- 19 647 842
- DE-A1-102006 037 544
- DE-U1- 20 313 663

## Beschreibung

Die Erfindung betrifft einen Gurtaufroller mit einem Rahmen, einem Sensor zur fahrzeugsensitiven Blockierung, der einen Sensorhebel aufweist, einer Gurtspule und einem über eine Kupplung mit der Gurtspule gekoppelten Schlepphebel, der verstellbar ist zwischen einer Ausgangsstellung, in der der Sensorhebel blockiert ist, und einer Auszugsstellung, in der der Sensorhebel freigegeben ist.

Gurtaufroller weisen ein fahrzeugsensitives Blockiersystem auf, das meist mit einem Sensor versehen ist, der gewöhnlich als Trägheitsmasse eine Metallkugel aufweist, die in einer gehäusefesten Schale beweglich gelagert ist. Auf der Metallkugel liegt ein Sensorhebel auf, der an einem Gehäuse schwenkbar gelagert ist und durch die Bewegung der Metallkugel um ein Schwenklager verschwenkt wird. Bei einer solchen Verschwenkung des Sensorhebels gelangt dessen Ende in die Bewegungsbahn einer Steuerverzahnung am Umfang einer auf der Gurtspule begrenzt verdrehbar angeordneten Steuerscheibe. Dadurch wird die Steuerscheibe angehalten, sodass es zu einer Relativdrehung zwischen der Steuerscheibe und der Gurtspule kommt. Diese Relativdrehung wird ausgenutzt, um eine an einem Rahmen des Gurtaufrollers schwenkbar gelagerte Blockierklinke in Blockiereingriff mit einer Blockierverzahnung zu bewegen, die der Gurtspule zugeordnet ist.

Um im Fahrbetrieb, beispielsweise auf unebener Straße, das Auftreten von störenden Geräuschen durch Erschütterungen auf das Fahrzeug zu verringern, ist aus der DE 10 2006 037 544 A1 bekannt, einen zusätzlichen Schlepphebel vorzusehen, der über eine Reibkupplung mit der Gurtspule gekoppelt ist und der den Sensorhebel in der Ausgangsstellung blockiert. Der Sensorhebel ist durch diesen Schlepphebel in nahezu allen Betriebszuständen des Gurtaufrollers blockiert, sodass ein Klappern des Sensorhebels zuverlässig verhindert ist. Der Sensorhebel wird vom Schlepphebel nur freigegeben, wenn die Gurtspule in Abwickelrichtung gedreht wird oder wurde, also in Betriebszuständen wie einer starken Bremsung, bei der die Gurtspule blockiert werden muss. Die Kupplung ist bei solchen Gurtaufrollern sehr hohen Belastungen ausgesetzt.

Aufgabe der Erfindung ist es, einen Gurtaufroller der eingangs genannten Art bereitzustellen, der eine verbesserte Stabilität aufweist.

Zur Lösung der Aufgabe ist ein Gurtaufroller vorgesehen, mit einem Rahmen, einem Sensor zur fahrzeugsensitiven Blockierung, der einen Sensorhebel aufweist, einer Gurtspule und einem über eine Kupplung mit der Gurtspule gekoppelten Schlepphebel, der verstellbar ist zwischen einer Ausgangsstellung, in der der Sensorhebel blockiert ist, und einer Auszugsstellung, in der der Sensorhebel freigegeben ist. Erfindungsgemäß ist die Kupplung eine Schlingfederkupplung, mit einem mit der Gurtspule gekoppelten Antriebselement sowie einem mit dem Schlepphebel verbundenen Abtriebselement, wobei das Antriebselement und das Abtriebselement eine ringförmige äußere Reibfläche aufweisen und konzentrisch zueinander angeordnet sind und dass eine Spiralfeder vorgesehen ist, die an den Reibflächen anliegt und das Abtriebselement mit dem Antriebselement koppelt. Eine Schlingfederkupplung hat den Vorteil, dass diese eine sehr hohe Stabilität aufweist, da aufgrund der Konstruktionsweise weniger Einzelteile vorhanden sind, die zudem so ausgebildet sind, dass diese nicht brechen oder anderweitig verformt werden können. Eine solche Schlingfederkupplung ermöglicht zudem eine bessere Anpassung der Kupplung an die im Fahrzeugbetrieb auftretenden Belastungen. Insbesondere können über die Schlingfederkupplung die Kupplungseigenschaften sehr genau eingestellt werden, sodass auch das Ansprechverhalten des Gurtaufrollers sehr genau eingestellt werden kann.

Die Spiralfeder liegt vorzugsweise mit einem ersten Abschnitt an der Reibfläche des Abtriebselements und mit einem zweiten Abschnitt an der Reibfläche des Antriebselements an. Die Spiralfeder erstreckt sich vom ersten zum zweiten Abschnitt in einer Wickelrichtung, die der Aufrollrichtung des Gurtaufrollers entspricht. Eine Besonderheit der Schlingfederkupplung ist, dass die Kräfte, die vom Antriebselement auf das Abtriebselement übertragen werden können, abhängig von der Drehrichtung unterschiedlich hoch sind. Wird das Antriebselement entgegen der Wickelrichtung gedreht, so wird die Feder aufgrund der Reibung und/oder zusätzlicher Anschläge, die die Spiralfeder am Antriebselement und/oder am Abtriebselement fixieren, geringfügig enger gegen das Antriebselement und das Abtriebselement gezogen, sodass die Reibkräfte größer werden und eine größere Kraft übertragen werden kann. Wird das Antriebselement dagegen in entgegengesetzter Richtung gedreht, lockert sich die Feder aufgrund der Reibung des Antriebselements, sodass eine geringere Kraft übertragen werden und im Extremfall sogar die Spiralfeder am Antriebselement und/oder am Abtriebselement durchrutschen kann. Die Wickelrichtung der Spiralfeder ist so gewählt, dass bei einem schnellen Gurtbandauszug die Feder zugezogen wird und eine erhöhte Kraft übertragen wird, also ein Durchrutschen zwischen Antriebselement und Abtriebselement ausgeschlossen ist. Dadurch kann über die Kupplung der Schlepphebel betätigt und somit der Sensorhebel freigegeben werden.

Ein in Wickelrichtung erstes Ende der Spiralfeder ist vorzugsweise am Schlepphebel gehalten, sodass sich dieses Ende nicht relativ zum Schlepphebel bewegen kann.

Am Schlepphebel kann des Weiteren ein Vorsprung vorgesehen sein, an dem das zweite Ende der Spiralfeder in Wickelrichtung anliegt. Das erste und/oder das zweite Ende der Spiralfeder können vorzugsweise um einen definierten Winkel verschwenkt werden. Durch die Anschläge ist der maximale Schwenkwinkel der Enden und somit der maximale Grad festgelegt, um den sich die Spiralfeder lockerer bzw. fester um das Antriebselement und das Abtriebselement legen kann. Somit ist die minimale bzw. die maximale Reibung, die zwischen Abtriebselement und Antriebselement wirken kann, festgelegt.

Am Rahmen kann des Weiteren ein Anschlag für das erste Ende der Spiralfeder vorgesehen sein, der in Wickelrichtung vor dem ersten Ende der Spiralfeder angeordnet ist. Wird die Gurtspule und somit der Schlepphebel in Aufrollrichtung gedreht, beispielsweise beim Aufrollen des Gurtbandes auf der Gurtspule, wird das erste Ende der Spiralfeder gegen diesen Anschlag bewegt und bei einem weiteren Drehen in Aufrollrichtung gegen diesen gedrückt. Die Wicklungen der Spiralfeder am Abtriebselement und/oder am Antriebselement werden dadurch gelockert, so dass die Reibung zwischen der Spiralfeder und dem Abtriebselement beziehungsweise dem Antriebselement geringer wird. Durch diese geringere Reibung kann das Antriebselement gegen die Spiralfeder, die durch den Anschlag festgelegt ist, bewegt werden, sodass ein weiteres Drehen der Gurtspule zum Aufwickeln des Gurtbandes ohne ein Mitdrehen des Schlepphebels möglich ist. Die Koppelung zwischen Gurtspule und Schlepphebel wird also gelockert oder sogar aufgehoben.

Am Rahmen kann des Weiteren ein Anschlag für das zweite Ende der Spiralfeder vorgesehen sein, der in Wickelrichtung hinter dem zweiten Ende der Spiralfeder angeordnet ist. Wird das Gurtband mit normaler Geschwindigkeit abgerollt, beispielsweise beim Anlegen des Sicherheitsgurtes, wird das zweite Ende der Spiralfeder gegen diesen Anschlag bewegt, wodurch ebenfalls die Feder aufgedrückt wird und die Reibung zwischen Spiralfeder und Antriebselement beziehungsweise Abtriebselement reduziert ist. Dadurch ist ein weiterer Gurtbandauszug möglich, ohne dass der Schlepphebel mit der Gurtspule rotiert.

Um auch bei einer reduzierten Reibung zwischen der Spiralfeder und dem Antriebselement beziehungsweise dem Abtriebselement ein Mitdrehen des Schlepphebels zu verhindern, sind vorzugsweise am Gehäuse Anschläge für den Schlepphebel vorgesehen, die den Schwenkwinkel des Schlepphebels begrenzen.

Vorzugsweise bildet das Antriebselement ein Hohlrad eines Planetengetriebes, wobei das Sonnenrad des Planetengetriebes mit der Gurtspule verbunden ist und zumindest ein Planetenrad vorgesehen ist, das drehbar am Schlepphebel gelagert ist. Durch das Planetengetriebe erfolgt eine zusätzliche Koppelung des Antriebselements beziehungsweise der Gurtspule mit dem Schlepphebel. Wird die Gurtspule gedreht, beispielsweise beim Aufwickeln oder Abwickeln des Gurtbandes, wird das mit der Gurtspule verbundene Planetenrad angetrieben. Über das Planetenrad wird das Hohlrad, also das Antriebselement, angetrieben, wodurch über die Kupplung auch der Schlepphebel bewegt wird. Abhängig von der Drehrichtung der Gurtspule wird entweder das erste Ende oder das zweite Ende der Feder gegen einen der rahmenfesten Anschläge bewegt, wodurch durch das Aufdrücken der Feder die Koppelung zwischen Antriebselement und Abtriebselement aufgehoben wird. Sobald diese Koppelung aufgehoben ist, kann das Antriebselement ohne weitere Bewegung des Abtriebselements, also des Schlepphebels, gedreht werden.

Um den Schlepphebel widerstandsfähiger gegen mechanische Belastungen auszulegen, weist dieser vorzugsweise einen scheibenförmigen Grundkörper auf, und am Gehäuse ist eine topfförmige Aufnahme für den Grundkörper vorgesehen.

Um die Anzahl der Bauteile zu reduzieren, ist das Abtriebselement vorzugsweise einstückig mit dem Schlepphebel ausgebildet.

Weitere Vorteile und Merkmale finden sich in der nachfolgenden Beschreibung in Verbindung mit den beigefügten Zeichnungen. In diesen zeigen:
- Figur 1 eine perspektivische Ansicht eines Gurtaufrollers nach dem Stand der Technik,
- Figur 2 einen Gehäusedeckel des Gurtaufrollers aus Figur 1, in dem ein Sensor zur fahrzeugsensitiven Blockierung gelagert ist,
- Figuren 3a bis 3c verschiedene Ansichten des Schlepphebels eines erfindungsgemäßen Gurtaufrollers sowie der Kupplung des Sensors,
- Figuren 4a und 4b Explosionsansichten des Schlepphebels sowie der Kupplung aus den Figuren 3a bis 3c,
- Figuren 5a bis 5c verschiedene Schnittansichten der Lagerung des Sensors beziehungsweise der Kupplung an einem erfindungsgemäßen Gurtaufroller,
- Figuren 6a und 6b verschiedene Ansichten der Lagerung der Kupplung sowie des Schlepphebels und des Sensors im Gehäusedeckel eines erfindungsgemäßen Gurtaufrollers,
- Figuren 7a bis 7c Darstellungen des Gurtaufrollers beim Aufrollen eines Gurtbandes auf dem Gurtaufroller,
- Figuren 8a bis 8c verschiedene Darstellungen des Gurtaufrollers beim Abrollen des Gurtbandes von der Gurtspule, und
- Figur 9 eine zweite Ausführungsform einer Gehäusekappe eines erfindungsgemäßen Gurtaufrollers.

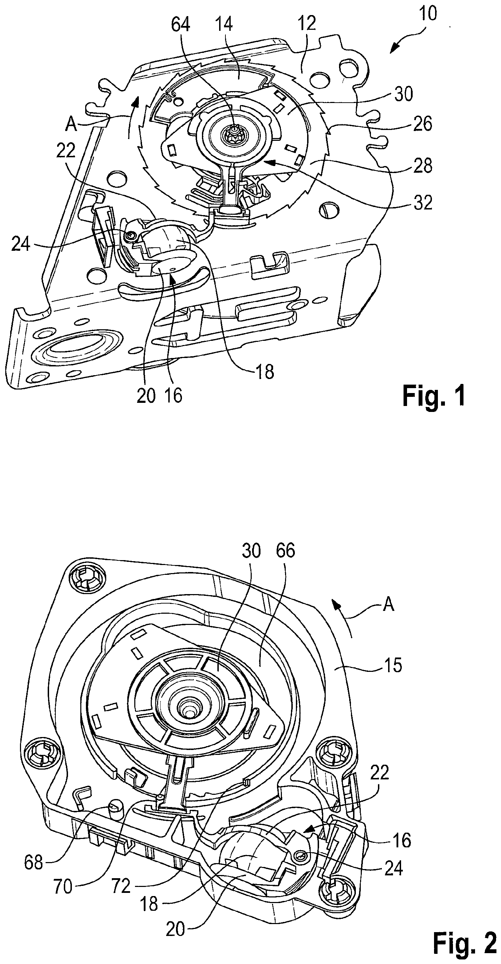

In Figur 1 ist ein Gurtaufroller 10 gemäß dem Stand der Technik gezeigt, der einen Rahmen 12, ein hier als Gehäusedeckel ausgebildetes Gehäuse 13, eine drehbar im Rahmen 12 gelagerte Gurtspule 14 und einen Sensor 16 aufweist, der zur fahrzeugsensitiven Blockierung der Gurtspule 14 dient.

Der Sensor 16 weist eine Metallkugel 18 auf, die als Trägheitsmasse dient und in einer rahmenfesten Schale 20 gelagert ist. Der Schale 20 gegenüberliegend ist ein Sensorhebel 22 vorgesehen, der über ein Lager 24 schwenkbar am Rahmen 12 gelagert ist.

Bei einer Erschütterung des Gurtaufrollers 10 wird die Kugel 18 aufgrund der großen Masse aus der Schale 20 herausbewegt, wodurch der Sensorhebel 22 um das Lager 24 verschwenkt wird, sodass dieser in die Verzahnung 26 einer Steuerscheibe 28 eingreift. Dadurch wird die Steuerscheibe 28 angehalten, sodass es zu einer Relativdrehung zwischen der Steuerscheibe 28 und der Gurtspule 14 kommt, wenn die Gurtspule in der Abwickelrichtung gedreht wird. Diese Relativdrehung wird genutzt, um einen Blockiermechanismus zu aktivieren, der die Gurtspule 14 rahmenfest blockiert.

Um im regulären Fahrzeugbetrieb ein Verschwenken des Sensorhebels 22 und somit ein Auslösen der Blockierung der Gurtspule 14 zu verhindern, ist ein Schlepphebel 30 vorgesehen, der in einer Ausgangsstellung den Sensorhebel 22 blockiert und in einer Auszugsstellung den Sensorhebel 22 freigibt, sodass eine fahrzeugsensitive Blockierung der Gurtspule 14 erfolgen kann. Der Schlepphebel 30 ist über eine Kupplung mit der Gurtspule 14 gekoppelt.

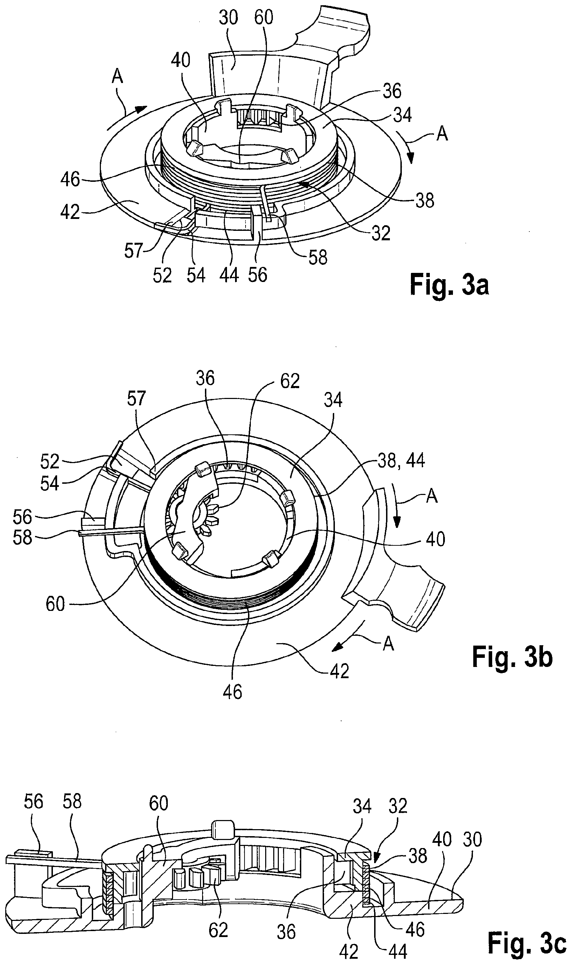

Die in Figur 3a bis 3c dargestellte Kupplung 32 des erfindungsgemäßen Aufrollers hat ein ringförmiges Antriebselement 34, das innenseitig eine Verzahnung 36 aufweist. Außenseitig weist das Antriebselement 34 eine Reibfläche 38 auf.

Des Weiteren weist die Kupplung ein Abtriebselement 40 auf, das einstückig mit dem Schlepphebel 30, insbesondere mit einem scheibenförmigen Grundkörper 42 des Schlepphebels 30, ausgebildet ist. Das Abtriebselement 40 weist ebenfalls eine ringförmige Reibfläche 44 auf, die den gleichen Durchmesser aufweist wie die Reibfläche 38 des Antriebselements 34.

In Figur 3c ist zu sehen, dass das Antriebselement 34 drehbar am Abtriebselement 40 beziehungsweise am Schlepphebel 30 gelagert. Das Antriebselement 34 und das Abtriebselement 40 sind um eine gemeinsame Achse verdrehbar, wobei die Reibflächen 38, 44 konzentrisch zueinander angeordnet sind.

Das Antriebselement 34 ist über eine Spiralfeder 46 mit dem Abtriebselement 40 gekoppelt. Das Antriebselement 34, das Abtriebselement 40 sowie die Spiralfeder 46 bilden gemeinsam eine Schlingfederkupplung, deren Aufbau und Funktionsweise nachfolgend erläutert wird.

Ein erster Abschnitt 48 der Spiralfeder 46 liegt an der Reibfläche des Abtriebselements 40 an. Ein zweiter Abschnitt 50 der Spiralfeder 46 liegt an der Reibfläche 38 des Antriebselements 34 an. Die Wickelrichtung vom ersten Abschnitt 48 zum zweiten Abschnitt 50 entspricht in eingebautem Zustand der Kupplung 32 der Aufrollrichtung A (siehe Figur 1) des Gurtaufrollers 10.

Am Schlepphebel 30 ist eine Aufnahme 52 für ein erstes Ende 54 der Spiralfeder vorgesehen. Des Weiteren ist ein Vorsprung 56 vorgesehen, der in Wickelrichtung, also in Aufrollrichtung vor dem zweiten Ende 58 der Spiralfeder 46 liegt und an dem das zweite Ende 58 anliegt, sowie ein Anschlag 57, der beabstandet in Wickelrichtung A hinter dem ersten Ende 54 liegt.

Die Spiralfeder 46 liegt vorgespannt an den beiden Reibflächen 38, 44 an, sodass durch die Reibung zwischen den Reibflächen 38, 44 und der Spiralfeder 46 das Antriebselement 34 mit dem Abtriebselement 40 gekoppelt ist. Der Reibungswiderstand zwischen den Reibflächen 38, 44 und der Spiralfeder 46 ist abhängig von der Kraft, mit der die Spiralfeder 46 gegen die Reibflächen 38, 44 gepresst wird. Wird die Spiralfeder 46 enger gegen um die Reibflächen 38, 44 gezogen, steigt die Reibung an, werden die Wicklungen der Spiralfeder 46 gelockert, wird die Reibung reduziert.

Durch die Aufnahme 52 sowie den Vorsprung 56 kann sich die Spiralfeder nicht weiter zu ziehen, so dass die maximal wirkende Reibung festgelegt ist. Ein Aufdrehen der Spiralfeder 46 entgegen der Wickelrichtung, beispielsweise durch ein Entfernen des zweiten Endes 58 vom Anschlag 57, ist dagegen möglich, bis das zweite Ende 58 am Vorsprung 56 anliegt.

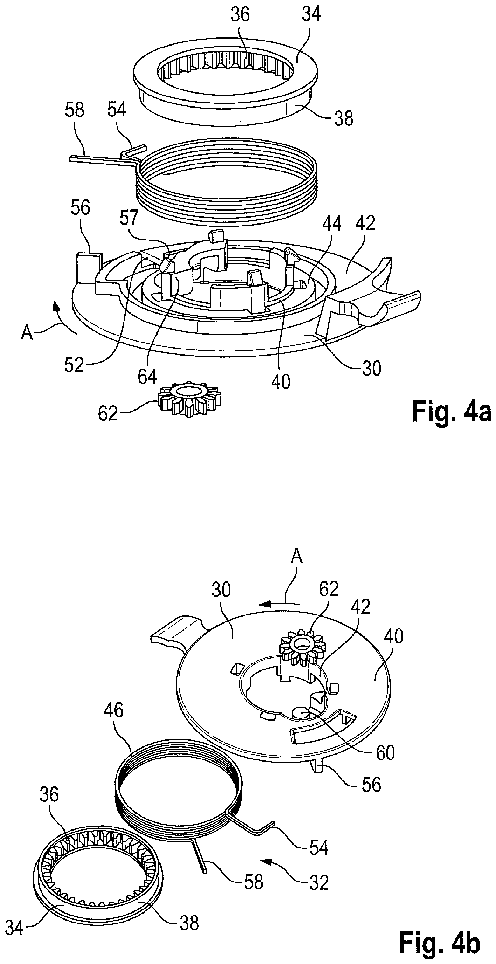

Wie in den Figuren 3a bis 3c sowie 4a und 4b zu sehen ist, ist am Schlepphebel eine Lagerung 60 für ein Zahnrad 62 vorgesehen. Das Zahnrad 62 ist in dieser Lagerung 60 drehbar am Schlepphebel 30 gelagert. Wie in Figur 3b zu sehen ist, greift das Zahnrad 62 in die Verzahnung 36 des Antriebselements 34 ein. Des Weiteren greift das Zahnrad 62 in ein auf der Gurtspulenachse montiertes Zahnrad 64 ein. Das Zahnrad 64 bildet das Sonnenrad eines Planetengetriebes, das Antriebselement 34 das Hohlrad sowie das Zahnrad 62 ein Planetenrad des Planetengetriebes.

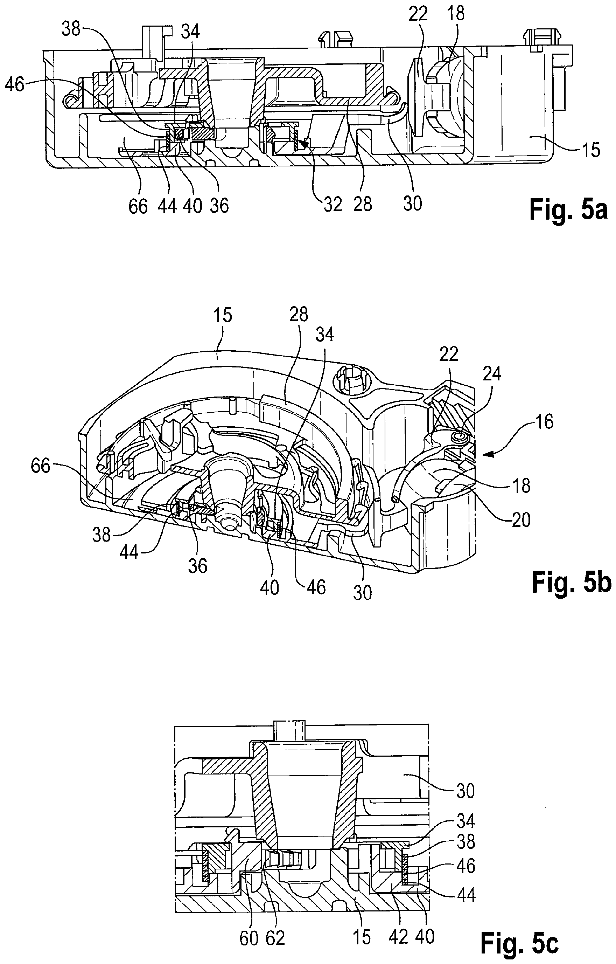

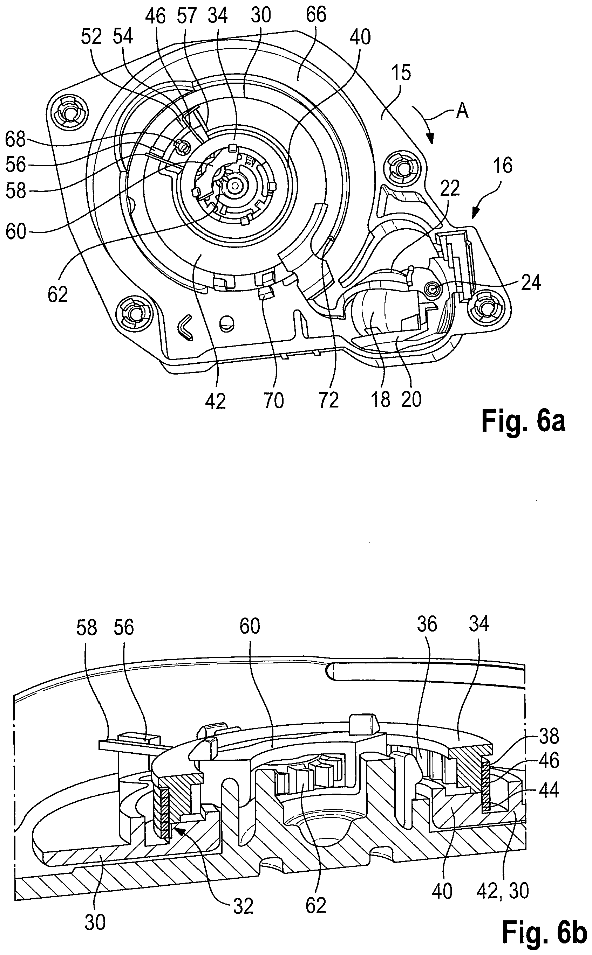

Wie in den Figuren 5a bis 5c sowie 6a und 6b zu sehen ist, ist der Schlepphebel 30 mit der Kupplung 32 in einer topfförmigen Aufnahme 66 am Gehäusedeckel gelagert. Am Gehäusedeckel ist des Weiteren ein bolzenförmiger Vorsprung vorgesehen. Wie in Figur 6a zu sehen ist, liegt der durch den Vorsprung gebildete Anschlag 68 in Wickelrichtung vor dem ersten Ende 54 der Spiralfeder sowie in Wickelrichtung hinter dem zweiten Ende 58 der Spiralfeder 46.

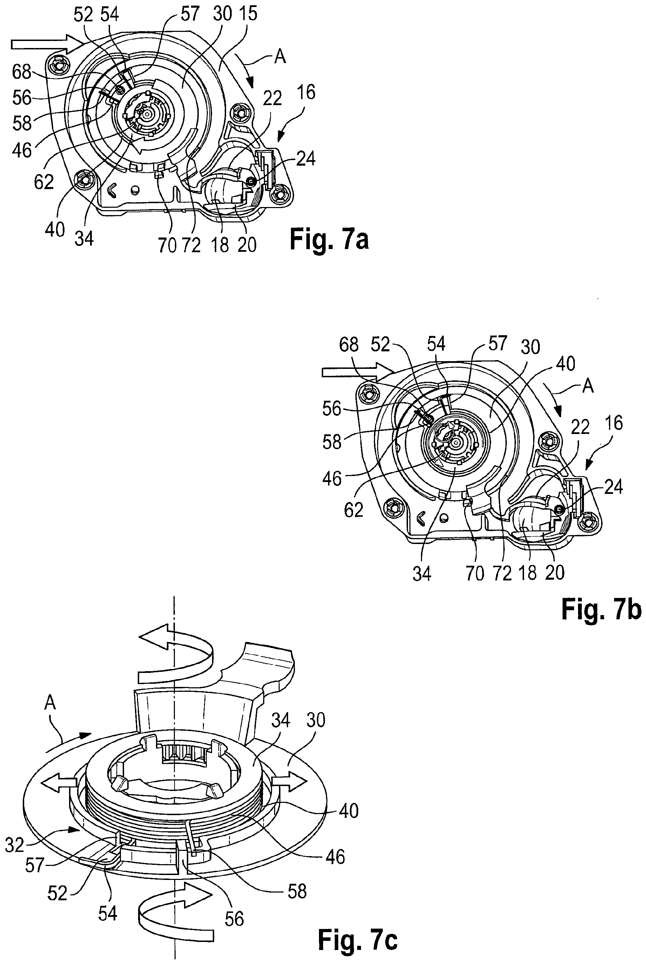

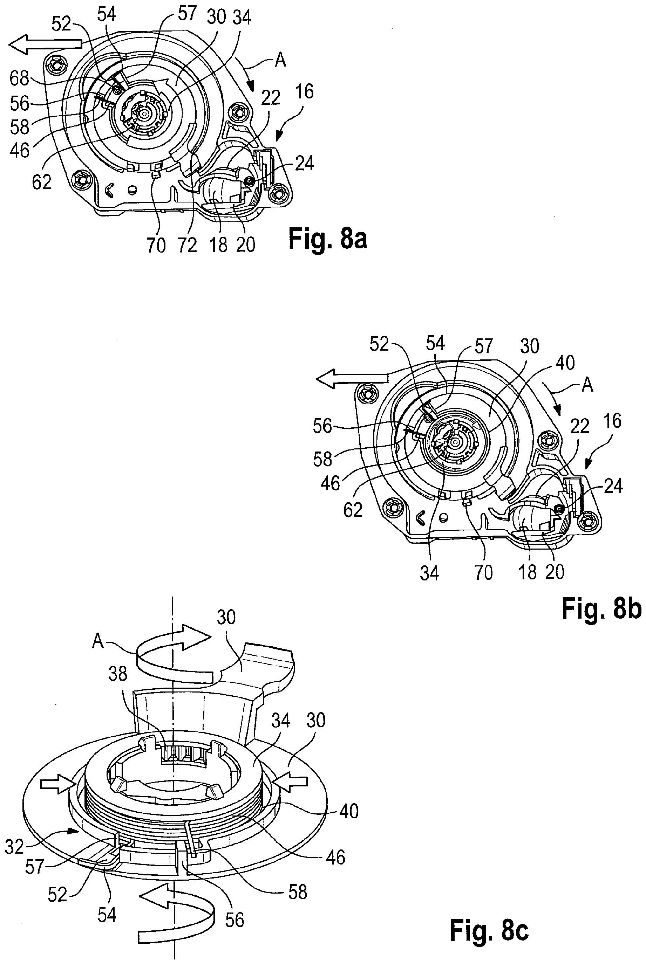

Die Funktionsweise des erfindungsgemäßen Gurtaufrollers 10 wird nachfolgend anhand der Figuren 7a bis 7c sowie 8a bis 8c erläutert.

In den Figuren 7a bis 7c ist der Aufwickelvorgang eines Gurtbandes auf der Gurtspule 14 gezeigt. Die Gurtspule 14 wird in Aufwickelrichtung A gedreht, wodurch der über die Kupplung 32 mit der Gurtspule 14 gekoppelte Schlepphebel 30 ebenfalls in Aufwickelrichtung A gedreht wird (Figur 7a). Der Schlepphebel 30 liegt am Sensorhebel 22 an, befindet sich also in der Ausgangsstellung.

Aufgrund der Koppelung des Schlepphebels 30 über die Kupplung 32 mit dem Antriebselement 34 ist eine Relativbewegung des Zahnrades 62 zum Antriebselement 34 nicht möglich, sodass die gesamte Einheit aus Schlepphebel 30 und Kupplung 32 gemeinsam mit der Gurtspule 14 in Aufrollrichtung A verschwenkt wird.

Bei dieser Drehung gelangt das zweite Ende 58 der Spiralfeder 46 mit dem Anschlag 68 in Anlage. Bei einer weiteren Drehung der Gurtspule 14 in Aufrollrichtung A wird zwar das erste Ende 54 der Spiralfeder 46 in Aufwickelrichtung A bewegt, das zweite Ende 58 der Spiralfeder 46 ist dagegen gehäusefest fixiert. Dadurch werden die Windungen der Spiralfeder 46 gelockert, sodass die Reibung zwischen Antriebselement 34 bzw. Abtriebselement 40 und der Spiralfeder 46 abnimmt, wodurch die Koppelung des Antriebselements 34 mit dem Abtriebselement 40 aufgehoben wird.

Das Antriebselement 34 kann also in dieser Position relativ zum Schlepphebel 30 bewegt werden. Bei einer weiteren Drehung der Gurtspule 14 wird über das Zahnrad 62, also das Antriebselement 34 gedreht, während der Schlepphebel 30 ortsfest bleibt.

Ein Mitdrehen des Schlepphebels 30 wird zudem durch einen Anschlag 70 am Gehäusedeckel verhindert, an dem der Schlepphebel 30 in Aufrollrichtung A anliegt.

Sobald die Gurtspule 14 nicht mehr gedreht wird, kann sich die Spiralfeder 46 zurück in die Ausgangsposition bewegen, in der eine Koppelung zwischen Antriebselement 34 und Abtriebselement 40 besteht.

Bei einer Drehung der Gurtspule wirkt die Kupplung 32 also als Reibkupplung, wobei ab einer bestimmten Kraft oder zu einem bestimmten Zeitpunkt ein Verdrehen des Antriebselements 34 relativ zum Schlepphebel 30 möglich ist.

Bei einer Gurtstraffung, bei der die Gurtspule 14 mit einer hohen Geschwindigkeit gedreht wird, kann die Kupplung 32 zudem als Kraftbegrenzer genutzt werden.

In den Figuren 8a bis 8d ist der Auszugsvorgang des Gurtbandes dargestellt. Die Gurtspule 14 wird entgegen der Aufrollrichtung A gedreht, wobei aufgrund der Kupplung 32 des Schlepphebels 30 mit dem Antriebselement 34 der Schlepphebel 30 entgegen der Aufrollrichtung A verschwenkt wird, bis dieser am Anschlag 72 anliegt.

In dieser Auszugsstellung liegt der Schlepphebel 30 nicht mehr am Sensorhebel 22 anliegt, dieser ist also freigegeben, sodass eine fahrzeugsensitive Blockierung erfolgen kann.

In dieser Drehrichtung wird der Schlepphebel 30 beziehungsweise die Kupplung 32 bewegt, bis das erste Ende 54 der Spiralfeder 46 am Anschlag 68 anliegt, wobei bei einer weiteren Bewegung der Gurtspule 14 entgegen der Aufrollrichtung A analog zum oben beschriebenen Vorgang die Federspannung reduziert wird, sodass ein relatives Verdrehen des Schlepphebels 30 zum Antriebselement 34 erfolgen kann. Der Schwenkwinkel des Schlepphebels 30 wird durch den Anschlag 72 begrenzt.

Die Verwendung einer Schlingfederkupplung zur Koppelung der Gurtspule 14 mit dem Schlepphebel 30 hat gegenüber den einfacheren Klammerfederkupplungen oder anderen Reibkupplungen den Vorteil, dass abhängig von der Drehrichtung der Gurtspule 14 eine Verstärkung beziehungsweise eine Reduzierung des möglichen übertragbaren Drehmoments möglich ist. Bei einer Drehung der Gurtspule 14 entgegen der Aufrollrichtung A, also bei einem Gurtbandauszug, zieht sich die Spiralfeder 46 gewissermaßen zu, sodass ein größeres Drehmoment übertragen werden kann. Es erfolgt also eine zuverlässigere Bewegung des Schlepphebels 30 von der Ausgangsstellung in die Auszugsstellung, sodass eine zuverlässige Freigabe des Sensorhebels 22 erfolgt. Bei einer Drehung in Aufrollrichtung A wirkt sich das durch die aufgehende Spiralfeder 46 geringere übertragbare Drehmoment dahingehend positiv aus, dass sich die Teile des Gurtaufrollers 10 einfacher gegeneinander verdrehen können, sodass die Belastung auf diese Bauteile reduziert ist.

Der Einsatz einer solchen Kupplung 32 ist unabhängig vom Aufbau des Gurtaufrollers 10 möglich, solange ein Schlepphebel 30 verwendet wird, der einen Sensorhebel 22 in einer Ausgangsstellung blockieren und in einer Auszugsstellung freigeben kann.

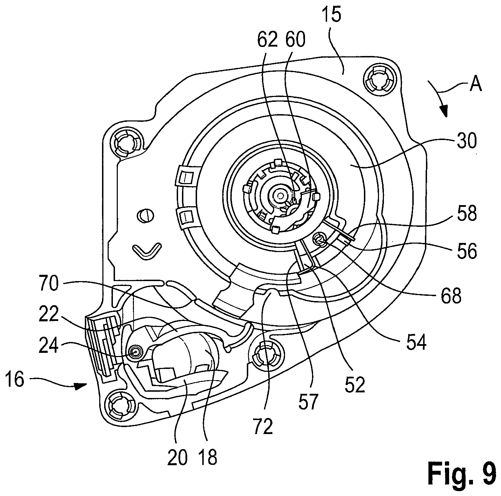

Eine zweite Ausführungsform eines Gehäusedeckels 15 für einen solchen Gurtaufroller 10 ist in Figur 9 dargestellt, wobei sich diese lediglich durch die Positionierung des Sensors 16 von der in den Figuren 1 bis 8 gezeigten Ausführungsform unterscheidet.

In den gezeigten Ausführungsformen sind der Schlepphebel 30 sowie der Sensor 16 in einem Gehäusedeckel 15 vorgesehen. Es ist aber auch denkbar, dass diese ausschließlich am Rahmen 12 des Gurtaufrollers 10 gelagert sind.

## Patentansprüche

1. Gurtaufroller (10), mit einem Rahmen (12), einem Sensor (16) zur fahrzeugsensitiven Blockierung, der einen Sensorhebel (22) aufweist, einer Gurtspule (14) und einem über eine Kupplung (32) mit der Gurtspule (14) gekoppelten Schlepphebel (30), der verstellbar ist zwischen einer Ausgangsstellung, in der der Sensorhebel (22) blockiert ist, und einer Auszugsstellung, in der der Sensorhebel (22) freigegeben ist,
**dadurch gekennzeichnet,**
**dass** die Kupplung (32) eine Schlingfederkupplung ist, mit einem mit der Gurtspule (14) gekoppelten Antriebselement (34) sowie einem mit dem Schlepphebel (30) verbundenen Abtriebselement (40), wobei das Antriebselement (34) und das Abtriebselement (40) jeweils eine ringförmige äußere Reibfläche (38, 44) aufweisen und konzentrisch zueinander angeordnet sind, und dass eine Spiralfeder (46) vorgesehen ist, die an den Reibflächen (38, 44) anliegt und das Abtriebselement (40) mit dem Antriebselement (34) koppelt.

2. Gurtaufroller nach Anspruch 1, **dadurch gekennzeichnet dass** die Spiralfeder (46) mit einem ersten Abschnitt (48) an der Reibfläche (44) des Abtriebselements (40) und mit einem zweiten Abschnitt (50) an der Reibfläche (38) des Antriebselements anliegt, wobei sich die Spiralfeder (46) vom ersten Abschnitt (48) zum zweiten Abschnitt (50) in einer Wickelrichtung erstreckt, die der Aufrollrichtung (A) des Gurtaufrollers entspricht.

3. Gurtaufroller nach Anspruch 1 oder 2, **dadurch gekennzeichnet, dass** ein in Wickelrichtung erstes Ende (54) der Spiralfeder (46) am Schlepphebel (30) gehalten ist.

4. Gurtaufroller nach einem der vorhergehenden Ansprüche, **dadurch gekennzeichnet, dass** am Schlepphebel (30) ein Vorsprung (56) vorgesehen ist, an dem das zweite Ende (58) der Spiralfeder (46) in Wickelrichtung anliegt.

5. Gurtaufroller nach einem der vorhergehenden Ansprüche, **dadurch gekennzeichnet, dass** am Rahmen (12) ein Anschlag (68) für das erste Ende (54) der Spiralfeder (46) vorgesehen ist, der in Wickelrichtung vor dem ersten Ende (54) der Spiralfeder (46) angeordnet ist.

6. Gurtaufroller nach einem der vorhergehenden Ansprüche, **dadurch gekennzeichnet, dass** am Rahmen (12) ein Anschlag (68) für das zweite Ende (58) der Spiralfeder (46) vorgesehen ist, der in Wickelrichtung hinter dem zweiten Ende (58) der Spiralfeder angeordnet ist.

7. Gurtaufroller nach einem der vorhergehenden Ansprüche, **dadurch gekennzeichnet, dass** am Gehäuse (15) Anschläge (70, 72) für den Schlepphebel (30) vorgesehen sind, die den Schwenkwinkel des Schlepphebels (30) begrenzen.

8. Gurtaufroller nach einem der vorhergehenden Ansprüche, **dadurch gekennzeichnet, dass** das Antriebselement (34) ein Hohlrad eines Planetengetriebes bildet, wobei das Sonnenrad des Planetengetriebes mit der Gurtspule (14) verbunden ist und zumindest ein Planetenrad vorgesehen ist, das drehbar am Schlepphebel (30) gelagert ist.

9. Gurtaufroller nach einem der vorhergehenden Ansprüche, **dadurch gekennzeichnet, dass** der Schlepphebel (30) einen scheibenförmigen Grundkörper (42) aufweist und am Gehäuse (15) eine topfförmige Aufnahme (66) für den Grundkörper (42) vorgesehen ist.

10. Gurtaufroller nach einem der vorhergehenden Ansprüche, **dadurch gekennzeichnet, dass** das Abtriebselement (40) einstückig mit dem Schlepphebel (30) ausgebildet ist.

## Claims

1. A belt retractor (10) comprising a frame (12), a sensor (16) for vehicle-sensitive blocking providing a sensor lever (22), a belt spool (14) and a rocker arm (30) coupled to the belt spool (14) via a coupling (32) which is adjustable between an initial position in which the sensor lever (22) is blocked and a pull-out position in which the sensor lever (22) is released,
**characterized in that**
the coupling (32) is a wrap spring coupling comprising a driving element (34) coupled to the belt spool (14) as well as a driven element (40) connected to the rocker arm (30), wherein the driving element (34) and the driven element (40) have a respective annular outer friction surface (38, 44) and are arranged concentrically to each other and **in that** a coil spring (46) is provided which is adjacent to the friction surfaces (38, 44) and couples the driven element (40) to the driving element (34).

2. The belt retractor according to claim 1, **characterized in that** the coil spring (46) is adjacent to the friction surface (44) of the driven element (40) by a first portion (48) and is adjacent to the friction surface (38) of the driving element by a second portion (50), wherein the coil springs (46) extends from the first portion (48) to the second portion (50) in a winding direction corresponding to the retracting direction (A) of the belt retractor.

3. The belt retractor according to claim 1 or 2, **characterized in that** a first end (54) of the coil spring (46) in the winding direction is held at the rocker arm (30).

4. The belt retractor according to any one of the preceding claims, **characterized in that** a projection (56) to which the second end (58) of the coil spring (46) is adjacent in the winding direction is provided at the rocker arm (30).

5. The belt retractor according to any one of the preceding claims, **characterized in that** a stop (68) for the first end (54) of the coil spring (46) arranged ahead of the first end (54) of the coil spring (46) in the winding direction is provided at the frame (12).

6. The belt retractor according to any one of the preceding claims, **characterized in that** a stop (68) for the second end (58) of the coil spring (46) arranged behind the second end (58) of the coil spring in the winding direction is provided at the frame (12).

7. The belt retractor according to any one of the preceding claims, **characterized in that** stops (70, 72) for the rocker arm (30) limiting the pivot angle of the rocker arm (30) are provided at the housing (15).

8. The belt retractor according to any one of the preceding claims, **characterized in that** the driving element (34) forms an internal gear of a planetary gearing, wherein the sun gear of the planetary gearing is connected to the belt spool (14) and at least one planet gear is provided which is pivoted on the rocker arm (30).

9. The belt retractor according to any one of the preceding claims, **characterized in that** the rocker arm (30) includes a disk-shaped body (42) and **in that** a pot-shaped seat (66) for the body (42) is provided at the housing (15).

10. The belt retractor according to any one of the preceding claims, **characterized in that** the driven element (40) is formed integrally with the rocker arm (30).

## Revendications

1. Enrouleur de ceinture (10), avec un châssis (12), un capteur (16) de blocage sensible au véhicule, qui comporte un levier de capteur (22), une bobine de ceinture (14) et un basculeur couplé (30) par un couplage (32) avec la bobine de ceinture (14), lequel est réglable entre une position de départ dans laquelle le levier de capteur (22) est bloqué et une position de sortie pour laquelle le levier de capteur (22) est libéré, **caractérisé en ce que**
l'embrayage (32) est un embrayage à ressort enroulé, avec un élément d'entraînement (34) couplé à la bobine de ceinture (14) ainsi qu' un élément entrainé (40) relié au basculeur (30), pour lequel l'élément d'entraînement (34) et l'élément entrainé (40) possèdent chacun respectivement une surface de friction extérieure annulaire (38, 44) et sont disposés concentriquement l' un par rapport à l'autre, et qu'un ressort hélicoïdal (46) est prévu, lequel repose contre les surfaces de friction (38, 44) et accouple l'élément entrainé (40) avec l'élément d'entraînement (34).

2. Enrouleur de ceinture selon la revendication 1, **caractérisé en ce que** le ressort hélicoïdal (46) repose en une première partie (48) sur la surface de friction (44) de l'élément entrainé (40) et en une seconde partie (50) contre la surface de friction (38) de l'élément d'entraînement, pour lequel le ressort hélicoïdal (46) s'étend dans une direction d'enroulement de la première partie (48) à la deuxième partie (50), laquelle direction correspond à la direction de rétraction (A) de l'enrouleur de ceinture.

3. Enrouleur de ceinture selon la revendication 1 ou 2, **caractérisé en ce qu'**une première extrémité (54) du ressort hélicoïdal (46) dans la direction d'enroulement est maintenue sur le basculeur (30).

4. Enrouleur de ceinture selon l'une des revendications précédentes, **caractérisé en ce que** sur le basculeur (30) est prévue une saillie (56) contre laquelle s'appuie la seconde extrémité (58) du ressort hélicoïdal (46) dans le sens d'enroulement.

5. Enrouleur de ceinture selon l'une des revendications précédentes, **caractérisé en ce que** sur le châssis (12) est prévue une butée (68) pour la première extrémité (54). du ressort hélicoïdal (46), laquelle est disposée dans la direction d'enroulement devant la première extrémité (54) du ressort hélicoïdal (46).

6. Enrouleur de ceinture selon l'une des revendications précédentes, **caractérisé en ce que** sur le châssis (12) est prévue une butée (68) pour la deuxième extrémité (58) du ressort hélicoïdal (46), laquelle est disposée dans le sens d'enroulement derrière la deuxième extrémité (58) du ressort hélicoïdal.

7. Enrouleur de ceinture selon l'une des revendications précédentes, **caractérisé en ce que** sur le boîtier (15) des butées (70, 72) sont prévues pour le basculeur (30), lesquelles limitent l'angle de pivotement du basculeur (30).

8. Enrouleur de ceinture selon l'une des revendications précédentes, **caractérisé en ce que** l'élément d'entraînement (34) forme un train épicycloïdal, pour lequel l'engrenage planétaire du train épicycloïdal est relié à l'enrouleur de ceinture (14) et au moins un engrenage planétaire est prévu, lequel est disposé libre en rotation sur le basculeur (30).

9. Enrouleur de ceinture selon l'une des revendications précédentes, **caractérisé en ce que** le basculeur (30) présente un corps de base en forme de disque (42) et sur le boîtier (15) est prévu un réceptacle en forme de coupe (66) pour le corps de base (42).

10. Enrouleur de ceinture selon l'une des revendications précédentes, **caractérisé en ce que** l'élément entrain » (40) est formé d'un seul tenant avec le basculeur (30).
